# EUROPEAN PATENT APPLICATION

(11) **EP 4 311 614 A1**
(43) Date of publication of application: **31.01.2024**
(21) Application number: 23184738.5
(22) Date of filing: 11.07.2023
(51) Int. Cl.: B22F 10/14, B28B 1/00, B33Y 10/00, B33Y 70/00, B22F 10/62, B22F 10/64, C22C 1/04, C22C 1/10, C22C 29/00, B22F 1/10, C22C 1/05, C22C 32/00

(54) **COMPOSITION AND METHOD FOR MANUFACTURING ARTICLE**

(30) Priority: 29.07.2022 US 202263393660 P; 26.09.2022 US 202217952545
(71) Applicant: Transportation IP Holdings, LLC, Norwalk, CT 06851 (US)
(72) Inventor: Dorfner, Rachel, Norwalk, CT 06851 (US); McClintic, Shawn A., Norwalk, CT 06851 (US); Heher, Brett, Norwalk, CT 06851 (US)
(74) Representative: Laufhütte, Dieter

(57) **Abstract**

A composition of matter for use in a binder jet is provided. The composition includes a binder, and the binder includes a polymer made from saturated monomers. The binder may be a reversible binder that decomposes during sintering. And, different binders may be used in different locations of a target object produced using the inventive compositions.

## Description

### CROSS-REFERENCE TO RELATED APPLICATIONS

This application claims priority to U.S. Provisional Application No. 63/393,660 (filed 29-July-2022), the entire disclosure of which is incorporated herein by reference.

### BACKGROUND

### Technical Field.

The subject matter described relates to materials and methods for manufacturing articles, and additive manufacturing generally.

### Discussion of Art.

During additive manufacturing, i.e., a 3-D printing process, successive layers of a part may be deposited until the part is formed. Each layer may be a thinly sliced cross-section of the target part being formed. Such manufacturing allows for the formation of complex shapes. Additive manufacturing may involve metal laser melting, laser sintering, and binder jetting of particles or powders. These additive manufacturing techniques may melt, sinter, or chemically bind layers of material to generate a desired article. Metal injection molded parts and equipment may be bonded during a sintering process. Sintering is a method by which powdered metal and adhesive is warmed to a temperature just under the melting point of the metal to bond the powdered particles together. The warming may be done by a laser, in an oven, or the like. But, metal injection molded parts may have manufacturing limits that are inherent to the metal injection molding process.

There are several molding techniques for manufacturing articles, such as sand molding, cast molding, and/or injection molding, among others, that may manufacture parts. Additive manufacturing techniques may include laser melting, laser sintering, and binder jetting. Laser melting and laser sintering additive manufacturing techniques heat the material to consolidate and build layers of the material to form a metal part. Binder jetting may use a chemical binder to bond particles of the material into layers that form a solid `green body'. The green body may be further processed (e.g., sintered) to consolidate the layers and form the part. Bonding layers of material using a chemical binder has been used in sand molding techniques to bond sand particles and form a sand mold that can be used to fabricate other parts. Similar to sand molding, in binder jet printing, the chemical binder is successively deposited into or with layers of powder, where the powder is the basis for the subsequent part build. The binder holds the powder in place during consolidation of the powder into a solid. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering). Debinding and sintering steps may not be part of sand molding processes, in which the chemical binder remains an integral part of the sand mold, even as the sand mold is subsequently used to form a molded part. However, in binder jet 3D printing, the chemical binder may be an integral part of the green body part (e.g., the chemical binder is disposed within and in between each layer of the printed part), and is subsequently removed during debinding and/or sintering to form a completed 3D printed part.

Post-printing processes of a binder jet manufacturing method may decompose the chemical binder to form char residue within (e.g., between the particles of the powder) the part. For example, in binder jet 3D printing, the printed (green body) part may undergo a sintering process to consolidate particles of powder within the printed layers and increase the density of the printed part, thereby forming a substantially solid, consolidated part having sufficient strength for use in machinery. For sinterable powder applications, during sintering the printed part may be exposed to temperatures near (e.g., within about 70% of) the absolute temperature melting point of the powder used to fabricate the printed article. Therefore, sintering temperatures may be in excess of 1000 degrees Celsius (°C.), if a sinterable powder used to fabricate the printed part. A known binder may include an organic compound. At the sintering temperatures, such a chemical binder can incompletely decompose and form a char residue that may be consolidated along with the layers in the consolidated part. Additionally, the sintering conditions may cause oxidation of the in the part, resulting in oxide formation. The char residue may affect certain properties of the article (e.g., microstructure, mechanical properties) that may result in undesirable effects (e.g., stress fractures, corrosion, etc.) when the article is in use. As used herein, the term `char residue' denotes a carbonaceous material formed from incomplete decomposition of the binder, oxygen-containing species bound to the binder, oxygen-containing species bound to the part (e.g., oxide), or combinations thereof.

Accordingly, to mitigate formation of char residue during sintering, a binder removal step may need to be performed to remove a substantial portion of the chemical binder to form a brown body part before sintering. A the brown body part may need sufficient handling strength (brown handling strength) to maintain the integrity of the structure until it undergoes sintering to consolidate the layers. At least some of the chemical binder may need to remain in the brown body part to provide a minimum level of brown strength.

Some chemical binders currently available for binder jet 3D printing tend to produce residue, such as char or unwanted oxides, within the consolidated part. For example, a process for removing the chemical binders from the brown body may be performed in an oxygen (O₂) containing environment. The O₂ may drive complete decomposition of the chemical binder to carbon dioxide (CO₂) and water (H₂O), among other decomposition by-products. However, these debinding conditions (e.g., O₂-containing environment) may result in formation of unwanted oxides in the consolidated part. Accordingly, certain properties (e.g., mechanical properties) of the consolidated part may be undesirable and the part may be unsuitable for use in the desired machinery. Some newer chemical binders that can be used for binder jet 3D printing may provide sufficient bond strength to maintain the integrity of the brown body part before sintering, and may be cleanly removed during sintering such that the consolidated part is substantially free of char and any other undesirable decomposition products (such as oxides) of the chemical binder. Currently available reversible binders may be based on unsaturated monomers. To date, the binder materials have deficiencies that ongoing development is attempting to address. Additionally, the available materials seek to reduce or eliminate residual materials. And, the bound particles or powder types used may be homogeneous in composition, size and morphology (or controlled to be as homogeneous as current technology allows). It may be desirable to have materials and methods that differ from those that are currently available.

### BRIEF DESCRIPTION

In one or more embodiments, a composition of matter for use in a binder jet is provided. The composition includes a binder, and the binder includes a polymer made from saturated monomers.

In one embodiment, the binder may be a reversible binder that functions to hold together sinterable particles as a green body and to support the green body while the green body is sintered to form a target object. During sinter, the reversible binder may decompose and exfiltrate the green body and/or decompose and react with the sinterable particles for form, for example, alloys, oxides, carbides, silicides, borides, nitrides and the like, and/or further react to form a ceramic or cermet material.

In one embodiment, a composition of matter for use in a binder jet is provided. The binder may include a reversible binder and one or more sinterable powders.

In one embodiment, a method of binder jetting using plural reversible binders is provided. The plural reversible binders may include at least an oxide forming binder and a non-oxide forming binder. The method may include depositing at least one powder selected from metal powder and ceramic precursor powder. Depositing a first reversible binder with the at least one powder. The first reversible binder being an oxide forming binder. Depositing a second reversible binder with the at least one powder. The second reversible binder being a non-oxide forming binder, and the depositing of the second reversible binder is in a different location than the depositing of the first reversible binder.

In one embodiment, a method of binder jetting using a polymerizable monomer and a vulcanizing agent is provided. The method may include depositing the polymerizable monomer and vulcanizing agent in contact with each other during a binder jetting process to form a green body having a form of a target object. The green body may be heated to vulcanize the polymerizable monomer and form the vulcanized target object.

### BRIEF DESCRIPTION OF THE DRAWINGS

The inventive subject matter may be understood from reading the following description of non-limiting embodiments, with reference to the attached drawings, wherein below:
Figure 1 illustrates a schematic process diagram of a process for manufacturing equipment;
Figure 2 illustrates a perspective view of equipment;
Figure 3 illustrates a section view of equipment;
Figure 4 illustrates a perspective view of equipment;
Figure 5 illustrates a section view of equipment;
Figure 6 illustrates a perspective view of equipment; and
Figure 7 illustrates a section view of equipment.

### DETAILED DESCRIPTION

Embodiments of the subject matter described herein relate to methods and processes for forming equipment using combining equipment parts.

In one embodiment, a first portion of an article may be formed using a first green body composition, while a second portion of an article may be formed using a second green body composition. One of the first or second parts may be sinterable such that the first and second parts may then be heated to bond the parts together to form a single monolithic article.

Various green body compositions may have different sintering characteristics relative to each other. And some may be non-sinterable. The term non-sinterable as used herein refers to a body, part, portion, etc. that may not be able to be sintered. Specifically, the body, part, portion, etc. has already been solidified, such that the body, part, portion, etc. cannot be sintered during a combination or coupling process or step with another body, part, portion, etc. Such non-sinterable materials include both materials that cannot be sintered, as well as materials that could be sintered but have already gone through the sintering process, and thus cannot be re-sintered. As an example, a sinterable powder may undergo sintering in a determined temperature range for a determined period to bond each of the sinterable powder particle to one another. After the determined period, the bonded particles may be cooled to form a single formed metallic body, part, portion, etc. If the single formed metallic body, part, portion, etc. is then reheated back into the determined temperature range for sintering, no particles remain, preventing additional sintering, even though the formed metallic body, part, portion and the like is within the determined temperature range. By transforming from the powder particles to the formed body, part, portion, etc., the formed body is now a material that is non-sinterable, even though the powder form of the material was sinterable.

The term sinterable as used herein refers to a body, part, portion, and the like that is not provided in a final state, such that the body may be able to be sintered. Specifically, the body, part, portion, etc. has not been solidified, such that the body, part, portion, etc. can be sintered during a combination or coupling process or step with another body, part, portion, etc. An example sinterable body, part, portion, etc. is a powdered metal or ceramic precursor, often with an adhesive binder, that has particles that may be bonded together through a sintering process.

Suitable powders may include metals, ceramic precursors, and cermets (combination of ceramic and metallic materials). With regard to metals, steel and aluminum are suitable materials and have been useful with traditional binder materials. Other metal powders may be used with application specific changes to the associated production processes. The reversible binder materials disclosed herein likewise may be used with metal powders, and with steel alloys in particular.

The metal powders can be formed from granules, and the granules can be a mix of different metals in separate granules, or mixture of metals in the same granule (as a mixture or as an alloy). The granules can have selected sizes. The selected size of the granules can be a function of, for example, the size, metal type and content ratio, and number of first metallic particles and second metallic particles (where the granules differ) and the amount of reversible binder relative to the granule. In certain implementations, first metallic particles and the reversible binder can be added to the powder bed apart from second metallic particles. The size of the granules can be selected as a function of such separately added metallic particles and/or volume of first binder component. The size of the granules can be smaller in embodiments in which a higher fraction of the overall binder content is delivered from a printhead rather than premixed with the metallic powder.

In one embodiment, the metallic particles can have an average particle size in a range of less than about 1 micron, greater than about 1 micron and less than about 5 microns, or greater than about 5 microns. While such a size range can be useful in certain implementations, in other embodiments the metallic particles can have a smaller average particle size, such as an average particle size in a submicron range.

In certain implementations, the metallic particles can be a single material. For example, the metallic particles can be a pure elemental powder such as tungsten, copper, nickel, cobalt, and iron. Alternatively, the metallic particles can be a single alloy (e.g., 316L stainless steel, 17-4 PH stainless steel, Co-Cr-Mo powder, or F15 powder-a nickel-cobalt-iron alloy). In other implementations, the metallic particles can include a plurality of materials. For example, the ratio of the plurality of materials in the metallic particles can be in a determined ratio suitable for alloying with one another to achieve a target alloy composition in the target object (post sintering). As an additional or alternative example, the metallic particles can include material components of stainless steel. As a more specific example, the first metallic particles can include two or more of tungsten, copper, nickel, cobalt, and iron.

In one embodiment a carbon fiber composite may be used or formed into the bodies described herein. Carbon fiber composite may be referred to as carbon-carbon composite, CFC, and carbon reinforced matrix composite. CFC is a composite material formed from carbon fiber reinforcement in a matrix of graphite.

In one embodiment, the CFC material is made in three stages. First, CFC components are binder jet printed into their intended final shape or a near approximation thereto (as the "target object"), and is a green body part. The powder, the binder, or both can include carbon filament, whiskers, or other particles that are small enough to be printed. In one embodiment, the print pattern is built on top of an existing form, where the combination of the form and the print combine to result in the target object. In one embodiment, the powder and/or the binder may include coke or a fine carbon aggregate. In another embodiment, the binder converts at least partially to char to provide the carbon that binds the carbon fiber in the CFC.

Second, the green body is heated. In particular, thermal energy is provide to the green body until the initialization of pyrolysis. The pyrolysis, in on embodiment, transforms the binder (or the residual of the reversible binder if such is used) to relatively pure carbon. The binder may loses volume in the process. Loss of volume may cause voids to form within the green body. The presence of aggregate or filler powder (metal, ceramic, and the like) may reduce or eliminate this effect. In one embodiment, the reversible binder converts directly to carbon (at a rate preferable greater than 50% by weight). Unwanted, low molecular weight decomposition products of the reversible binder may leave while desirable decomposition products stay to form part of the CFC. In another embodiment, the binder is not reversible and all, or nearly all, of the binder remains and is converted to CFC matrix material.

If voids are desired (to reduce the density, for example) the binder formula may be selected to do so. This may create even larger voids (by escaping material or by gasification of a material (such as a reversible binder residual that becomes gaseous upon cleaving).

Third, optionally, the voids may be created and then subsequently filled. This may be by cooling the target object and infusing with a liquid (that may then solidify), or by forcing a carbon-forming gas, such as acetylene, through the CFC at a high temperature. Other processing aspects, such as impregnation under vacuum, may assist the densification. The temperature may be still high as residual heat from the pyrolytic second step, or the void filling step may be a distinct heating/infusion step that occurs later. The infusion may be done over the course of several days, in one embodiment. This long heat treatment process may allow the carbon to form into relatively large graphite crystals.

The resulting CFC target object may be relatively hard as compared to other carbon based reinforced materials that are not CFCs. While many formulations are contemplated, most result in a target object that can be highly resistant to thermal expansion, temperature gradients, and thermal cycling. In one embodiment, the CFC target object may retain its physical properties above 2000 °C. Suitable post-processing may further improve temperature resistance properties. A suitable post-processing step may include coating the target object with a protective coating. Suitable protective coatings may reduce or prevent one or more of oxidation, moisture uptake, friction, and ultraviolet radiation breakdown. During testing, coupons formed using a residual binder as the source for the carbon and carbon whiskers have a density in a range of from about 1.6 to about 1.98 g/cm3. In one embodiment, the reversible binder may be admixed with ceramic precursor materials to print a green body. Upon sintering or pyrolysis, the green body forms a target object that is formed of a carbon fibre-reinforced silicon carbide (C/SiC). Test coupons of C/SiC are denser than pure carbon-carbon and are relatively more durable. A suitable non-ceramic CFC may be a carbotanium carbon-titanium composite.

In one embodiment, plural metallic particle types can be admixed to form the metal powder, and when melted and/or sintered may form an alloy that was not present in the powder. The alloy may contain an amount of the reversible binder in some embodiments. In implementations where the metallic particles include a plurality of materials, the metallic particles in combination with a residual component of the reversible binder can alloy to form a different material. For example, the metallic particles can include tungsten carbide having a submicron average particle size and cobalt having an average particle size of about 1 micron. These particles can be sintered to form a tungsten-carbide-cobalt based hard metal. As an example of such a tungsten-carbide-cobalt based hard metal, the metallic particles can include the reversible binder, stainless steel, tungsten carbide and cobalt such that sintering the three-dimensional object including these materials to form microstructures in a stainless-steel matrix. The microstructures can be areas of tungsten carbide-cobalt, with these areas having high hardness. Another example includes a metal silicide. Suitable metal silicides may include titanium silicide, cobalt silicide, and nickel silicide. Other metal reactants can include nitrides, borides, and phosphides.

In one embodiment, the metallic particles can include materials that do not easily alloy with one another (e.g., tungsten and copper, or molybdenum and copper). Additionally, or alternatively, the plurality of materials in the metallic particles can have different average particle sizes or particle morphologies, with one of the materials being much finer than another one or more of the materials. Because sintering temperature may be a function of the particle size, differences in the sizes of the different materials included the first metallic particles can be useful for achieving staged sintering at a target temperature. This may be helpful in forming a brown body object while reversing the reversible binder. This may be helpful in controlling whether the metallic particles form alloys or microstructures.

Regarding ceramic materials, suitable ceramic precursors may include one or more of aluminum based materials, such as aluminum nitride, alumina / aluminum oxide precursors, and alumino-silicate materials. Suitable ceramic precursors may include one or more boron based materials, such as boron carbide and boron nitride. Other suitable ceramic precursors may include carbide based materials. Other suitable ceramic precursors may include barium materials, such as barium neodymium titanates, barium strontium titanate, and barium tantalite.

In one embodiment, ceramic microspheres may be a component in the printing process. These spheres may have a particle size in the range of less than one micrometer, from about 1 to about 100 micrometer, or greater than about 100 micrometers. With regard to the skeletonized structures the use of the spheres may provide, for lower strength, lower density, but higher flow through capability (based on the larger channels), larger particle sizes can be used. For higher strength, relatively smaller diameter ceramic particles can be used. Ceramic microspheres in the desired size range can be mixed with the reversible binder. The reversible binders can then be removed - for example, through solvent debinding and/or thermal debinding prior to or during sintering. After sintering, the target object will have a skeletal structure that is rigid. The rigidity may be due to neck formation. The shaped skeletal structure may have interconnected porosity that will be interpenetrating in nature. This shaped porous skeletal structure may be infiltrated with a new material (imparting new properties on the target object) or may be used as is. With a porous flowthrough configuration, and control over the size of the channels (as they will be a function of the spheres) the target object may be relatively lighter weight than a corresponding solid object, may be useful as a filter or a heat exchanger, and the like.

In one embodiment, the reversible binder is an adhesive and/or a flux agent and the post-printing processing conditions may decompose the reversible binder. The reversible binder may decompose into oligomers. The oligomers may continue to bond the layers of the brown body metal part such that the integrity of the structure of the brown body metal part is not affected.

In on embodiment, the oligomers may be further broken down in a separate subsequent post-printing process into smaller molecules. The decomposition products may be similar or identical to the monomers used to derive the reversible binder in some cases. These decomposition products may be gas or vapor at room temperature and standard pressure. In one embodiment, they may have a boiling point that facilitates removal of the decomposition products under the conditions associated with the post-printing processes. Accordingly, the article resulting from the printing and post-printing processes (i.e., the finished or consolidated metal part) may be substantially free of both the reversible binder and char residue (e.g., carbonaceous material from incomplete decomposition of the reversible binder, oxygen-containing species bound to the reversible binder, oxygen containing species bound to the metal part (e.g., metal oxides), and combinations thereof). Therefore, the properties (e.g., microstructure, mechanical properties, etc.) of the resultant metal part may be similar or equal to the properties of the sinterable powder used to generate the resultant sintered part without an adhesive. That is, a part may be printed first as a green body, then partially processed to a second brown body, and then further processed to a final part. Additional interim steps may be added as needed. And, post processing steps may be used to further modify aspects of the target object.

In another embodiment, the reversible binder may decompose and some or all of the binder components may remain in the final part. In some instances, the decomposition products may chemically react with the powder to affect the properties of the final part. As one example the binder may provide the oxygen that forms an oxide with aluminum powder to form aluminum oxide (alumina). By selectively placing a first reversible binder in some locations within the part, and a second reversible binder (or just another adhesive) in other locations within the part, the properties of the final part may be controlled in a determined way. For example, an alumina forming binder in one location of an aluminum part and an oxide preventing (or oxygen-free) binder elsewhere can result in a final part that includes both alumina portions and aluminum portions. Gradients of metal to oxide may be created using varying amounts of the first reversible binder in one embodiment.

In one embodiment, the reversible binder may include one or more polymers derived from unsaturated monomers. In another embodiment, the reversible binder may include one or more polymers derived from saturated monomers. A saturated compound is a chemical compound that resists addition reactions, such as hydrogenation, oxidative addition, and binding of a Lewis base. Saturated compounds may be relatively less reactive than unsaturated compounds. For unsaturated monomers, the level of unsaturation may affect performance. Saturated compounds are organic compounds that have only carbon-carbon single bonds, whereas unsaturated compounds are organic compounds containing at least one double bond or triple bond between carbon atoms.

Suitable unsaturated monomers may form one or more polymers having a following formula of (CH₂CHR)ₙ, where R=H, OH, phenyl, alkyl, or aryl. The reversible binder may also include one or more mono-functional acrylic polymers having the formula (CH₂ - CR2COOR1) ₙ, where R1=alkyl, aryl, and R2=H or CH₃, di-acrylic polymers having the formula [(CH₂-CR2COO)₂ - R3]n, where R2=H or CH₃ and R3=a divalent hydrocarbon radical; tri-acrylic polymers having the following formula [(CH₂CR1COO)₃ - R4] ₙ, where R1=H or CH₃ and R4=a trivalent hydrocarbon radical and/or poly(alkylene carbonates) including co-polymeric alkylene carbonates, such as poly(ethylene-cyclohexene carbonate). Other suitable carbonates may include those having the following formulas:

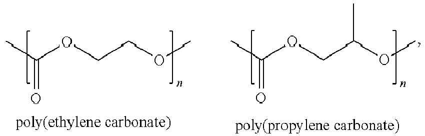

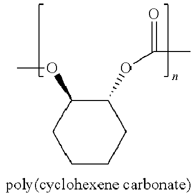

Suitable unsaturated reversible binder examples may include poly(methylmethacrylate) (PMMA), polystyrene (PS), polyhydroxystyrene, poly(vinyl alcohol) (PVA); poly(alkylene carbonates), for example QPAC^{®} 25, 40, 100, and 130 from Empower Materials, and polymers derived from hexanediol diacrylate (HDDA), trimethylolpropane triacrylate (TMPTA, for example, SR351 from Sartomer), and diethylene glycol diacrylate (DGD). Other suitable unsaturated reversible binders may include poly(alkylene carbonates). Suitable poly(alkylene carbonates) may include co-polymeric alkylene carbonates, such as poly(ethylene-cyclohexene carbonate). In one embodiment, the monomer includes one or more cleavable groups.

Suitable reversible binders derived from saturated monomers may include alkanes, epoxies, polyols, and silicon based materials. Suitable silicon based materials may include siloxanes, silanes and silicones. In one embodiment, the saturated reversible binder may be a thermoreversible crosslinked resin based on Diels-Alder reactions. In one embodiment, the saturated reversible binder may be a vitrimer. With elevated temperature, the crosslinks formed during cure may dissociate. The use of the saturated reversible binder may allow for manipulation or reforming of a green body part prior to its further processing (to brown body or full sinter, e.g.). For silicon based materials, silyl groups may be used as the functional or reactive bonding site.

Where silicon based reversible binders are used (saturated or unsaturated) the silicon may be intentionally left in the sintered powder as opposed to complete breakdown, gasification, and removal as in some other embodiments. Where the powder is steel, the residual silicon may form Fe-Si as a ferroalloy of iron (Fe) and Si, in one embodiment. Fe-Si may contain a ration in a range of from about 65 % to about 90 % of Si and minor amounts of Fe, aluminum (Al) and carbon (C). The addition of Si to the steel powder may be based at least in part on the intended purpose a strong deoxidizing power of silicon. The deoxidizing power of Si relative to that of C may depend on pressure, i.e., on the partial pressure of CO above the melt. At one atmosphere (atm), Si may be stronger than C; at low pressures (0.10 atm or less), as in a vacuum degasser, the deoxidizing power of C may be greater than Si, especially at higher C concentrations. Although Si is a stronger deoxidizer than Mn, when the two elements are used together (either separately or as Si-Mn) they may leave a much lower oxygen level in the steel. This may be in part because their joint deoxidation product is a manganese silicate, in which the activity of Si is much less than it would be if SiO₂ is the only product formed. However, the effectiveness of Mn in increasing the deoxidizing power of Si decreases with increasing Si content. As an example, the increase caused by 0.8 % Mn may be around 10 times more at 0.05 % Si than at 0.2 % Si.

The use of silicon based reversible binders may make the resulting component sound, by removing oxygen during the sintering process and avoiding the creation of, for example, iron oxides. In making steel components with the intent of creating an electrical steel, the amount of residual binder at final processing may be in a range of from about 0.5 % to about 5.0 % Si by weight. Based on the processing steps used, several electrical steel grades may be produced. Grain oriented steel, which may be heat treated to produce a particularly favorable crystallographic texture for ease of magnetization, and non-oriented steel, which has a random texture but may contain relatively as much or more Si. By allowing the silicon reversible binder to react with the forming steel part, the Si may increase the strength and the hardness of the steel, improve acid resistance and promote large grain sizes, which cause increasing magnetic permeability, promote desired crystal orientations and electrical resistivity, contributes to oxidation resistance, increase strength (but not plasticity) when quenched and tempered, and possibly improve hardenability of the steel.

Another suitable reversible binder material may include amine-containing polymers. Examples include polyethyleneimines, polyvinylamine, amino-functionalized polysaccharides (e.g., chitosan), amino-functionalized polypeptides (e.g., polylysine), amine-functionalized polyethylene glycol, and amino-functionalized polysiloxanes. The amine-containing polymer may contain multiple repeating units.

A suitable amine-containing polymer may be a polyethyleneimine (PEI). The PEI may be a linear PEI or a branched PEI. In some embodiments, the PEI is a branched PEI having the following structure: 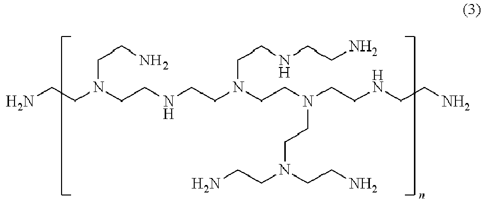 wherein n is an integer of at least 1, such as a value of 1, 2, 3, 4, 5, 10, 15, 20, 30, 40, 50, 100, 150, 200, 250, 300, 400, or 500, or a value within a range bounded by any two of the foregoing values. The value of n may correspond to a determined molecular weight based at least in part on application specific parameters. Imine groups may interact with oxide surfaces, e.g. the surface of silica and/or alumina, which may impart strength or affect other material characteristics.

Depending on application specific criteria, the amine-containing polymer may or may not contain additional functional groups (i.e., in addition to the already present amine groups) that may function as additional metal-binding or crosslinking groups. Some examples of additional metal-binding groups include hydroxy (OH), ketone, and carboxylic acid (or carboxylate metal or ammonium salt) groups. The metal ion in the carboxylate metal salt may result in a mainly covalent or ionic interaction with the carboxylate group. Some examples of metal ions include the alkali metals (e.g., lithium, sodium, or potassium), the alkaline earth metals (e.g., magnesium, calcium, or strontium), and transition metals (e.g., first row transition metals; such as scandium, titanium, vanadium, chromium, manganese, iron, cobalt, nickel, copper, and zinc).

In some embodiments, the amine-containing polymer is not chemically crosslinkable with itself. In other embodiments, the amine-containing polymer contains additional functional groups (e.g., epoxide, carboxylate, vinyl, or aldehyde) that make the polymer reversibly crosslinkable with itself, in which case the polymer can undergo crosslinking during a curing step and delinking in a subsequent step (e.g., using heat, solvent, and the like). The amine-containing polymer can be crosslinkable by, for example, containing functional groups that can crosslink in response to a crosslinking stimulus, such as heat, high energy electromagnetic radiation (e.g., ultraviolet light); or that can crosslink by contact with radical initiators, such as azobisisobutyronitrile, dicumyl peroxide, or benzoyl peroxide; or that can crosslink by exposure to air and/or directed energy of specific wavelengths. In other embodiments, the amine-containing polymer may or may not be mixed with another polymer that contains groups capable of crosslinking with the amine-containing polymer in response to any of the exemplary forms of stimuli provided above. In yet other embodiments, the polymer may contain selectively cleavable moieties.

In one embodiment, the reversible binder may include polymer strands that interact with each other via strong covalent forces (e.g., interactions, bonds). Such binders, including thermoset binders, may result in a brown body strength that can maintain the integrity of the structure until it undergoes sintering to consolidate the layers of the part. Such strong covalent bonds make the removal of the reversible binder during post-processing difficult in inert environments. As such, thermoset binders may be removed in the presence of air (oxygen), which can result in the presence of byproducts, or char, remaining in the part after much of the binder has been removed. The remaining byproducts of the thermoset binders can impact the properties of the printed part in a controlled and/or desired manner. For example, when removed in the presence of air the reversible binder may contribute to the increase in oxide (carbide, boride, nitride, silicide, etc.) formation within the part. The presence of such oxides may be useful in the intentional creation of parts made of metal oxides, such as alumina.

Table 1 (below) shows the carbon (C) and oxygen (O) content of consolidated metal parts manufactured using the reversible binder. As shown in Table 1, consolidated metal parts fabricated with certain reversible binders have a C and O content that is substantially less than the C and O content of the sinterable powder without the reversible binder. For example, as shown in Table 1, consolidated metal parts made using Inconel 625 as the sinterable powder and 5 wt % polymethylmethacrylate (PMMA) in 2-methoxyethanol or polystyrene in toluene as the binder solution yield a consolidated metal part having a C and O content that is less than the C and O content of the Inconel 625 sinterable powder. The data represented in Table 1 may be obtained via combustion analysis of binder jet 3D printed metal part samples using a LECO CS 844 Carbon/Sulfur Analyzer for carbon quantification and LECO ONH 836 Oxygen/Nitrogen/Hydrogen Analyzer for oxygen quantification.

**Table 1. Elemental analysis of Inconel 625 articles produced using various reversible binders.**

| | | | Maximum | | |
|---|---|---|---|---|---|
| Binder | Binder Formulation | Process Condition | Process Temp (° C.) | C (ppmw) | O (ppmw) |
| none | N/A | metal powder | N/A | 172 | 370 |
| PMMA | 5 wt % in 2-methoxy-ethanol | 7.4% O₂ debind | 400 | 176 | 120 |
| | | Vac. debind | 350 | 322 | 430 |
| | | Air debind | 350 | 170 | 949 |
| | | N₂ debind | 400 | 236 | 300 |
| | | N₂ debind/ vac. sintered | 1250 | 68 | 90 |
| PMMA | 7 wt % in 2-methoxy-ethanol | Vac. debind | 300 | 122 | 890 |
| | | Vac. debind/ vac. sintered | 1285 | 37 | 570 |
| PMMA | 7 wt % in 2-methoxy-ethanol | N₂ debind | 300 | 1517 | 1080 |
| | | N₂ debind/ vac. sintered | 1285 | 57 | 620 |
| PMMA | 7 wt % in 2-methoxy-ethanol | Air debind | 350 | 170 | 960 |
| | | Air debind/ vac. sintered | 1285 | 20 | 1060 |
| Poly- | 10 wt % in | 7.4% O₂ debind | 400 | 172 | 1070 |
| styrene | toluene | 7.4% O₂ debind/ vac. sintered | 1270 | 13 | 949 |
| Poly- | 10 wt % in | N₂ debind | 400 | 10800 | 490 |
| styrene | toluene | N₂ debind/ vac. sintered | 1270 | 24 | 140 |
| Poly- | 10 wt % in | Air debind | 350 | 177 | 1160 |
| styrene | toluene | Air debind/ Vac. sintered | 1270 | 13 | 1020 |
| QPAC-40 | 10 wt % in MEK | 7.4% O₂ debind | 400 | 178 | 900 |
| | | Air debind | 350 | 172 | 1280 |
| QPAC-40 | 10 wt % in MEK | N₂ debind | 400 | 270 | 317 |
| | | N₂ debind/ Vac. sintered | 1270 | 71 | 106 |
| PVA | 5 wt % in water | Vac. debind | 400 | 660 | 380 |
| | 5 wt % in | Vac. debind/ | 1270 | 377 | 70 |
| | water | vac. sintered | | | |

### EXPERIMENT 1:

An amount of 100 grams of a first reversible binder and 100 grams of a second reversible binder are used in an aluminum powder bed to 3D print a test coupon. The test coupon has alternating layers of differing widths with the layers containing, respectively, the first or second reversible binder. The sintering process is done under nitrogen in one instance and under vacuum in a second instance.

The first reversible binder is a composition that at the temperature of sintering aluminum powder it decomposes (cleaves at discrete molecular groups), gasifies due at least in part to the newly lower molecular weight, and does not interact with the sintering aluminum powder. The residual amount of the first reversible binder is below detectable limits and the aluminum powder is sintered as metallic aluminum.

The second reversible binder is a composition that at the temperature of sintering aluminum powder it decomposes, gasifies due at least in part to the newly lower molecular weight, and reacts with the bound aluminum particles as the aluminum particles sinter. The reaction converts the aluminum metal powder into alumina.

The test coupons have an electrically conductive layer of metallic aluminum sandwiched between layers of electrically non-conductive alumina.

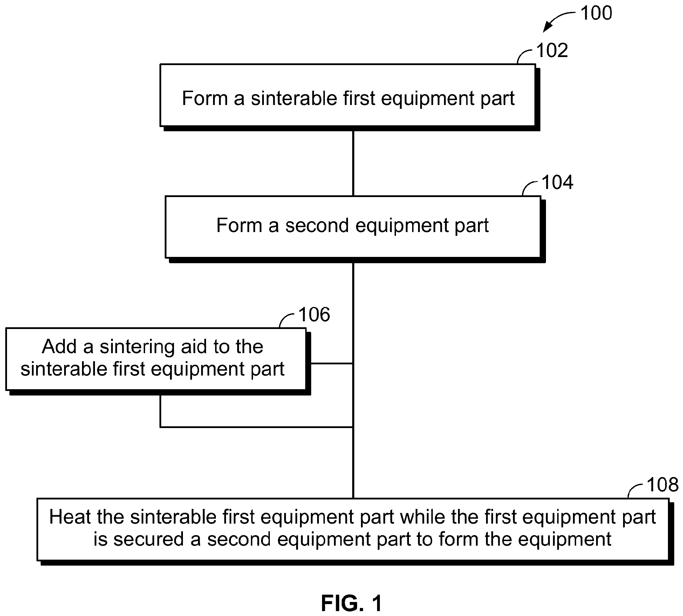

Figure 1 illustrates a method or process 100 for forming a single monolithic piece of equipment. The process may be utilized to combine or couple to bodies, parts, portions, or the like to form the equipment. At step 102, a sinterable first equipment part is formed. The sinterable first equipment part may be formed from a powdered metal. Suitable metals may include steel, aluminum, titanium, copper, iron, titanium, alloys thereof, etc. A suitable steel may be a stainless steel or a high-carbon steel. In one embodiment, the powdered metal may include a binder that holds the powder together. The binder may be a reversible binder. In one example, the powdered metal is part of a green body that represents a weakly bonded together mixture of the powdered metal and binder (bonding agent) before sintering occurs. In this manner, the sinterable first equipment part may be a sinterable three-dimensional green body. Optionally, during the heating process, the binder or bonding agent, may lyse, evaporate, and/or break down into components. By choosing a bonding agent that evaporates or decomposes in the heating temperature range, only metal remains as part of the equipment part, in one embodiment. Other embodiments have some components of the binder leave the structure, while others may stay to alter the physical and/or chemical properties of the metal. In some cases, plural metals and/or ceramic materials are used. In a similar way, binder residual material (if such is present) may alloy with or otherwise affect the material. Suitable binders may include reversible binders as disclosed herein.

In another example, only a portion of the first equipment part may comprise the powdered metal, with the rest of the first equipment part not able to be sintered. Alternatively, a flux agent may be applied at an interface between the sinterable first equipment part and the second equipment part. The flux agent may be configured to bond the sinterable first equipment part to the second equipment part during heating. In yet another example, when forming the sinterable first equipment part, the sinterable first equipment part may include one or more recesses at an interface between the sinterable first equipment part and the second equipment part. Such recesses may further facilitate coupling between the sinterable first equipment part and a second equipment part.

By forming the sinterable first equipment part separate from a second equipment part, the sinterable first equipment part may be a different metal, or formed form a manufacturing process that is more inexpensive than the second equipment part. As a result, when forming the single monolith piece of equipment, the simpler portions that require less complexity, flexibility, strength, or other differing characteristics may be formed separately from a second equipment part that is more expensive, more complex to manufacture, needs greater flexibility or strength, or the like and still combined to make the single monolith piece of equipment.

At step 104, a second equipment part is formed. The second equipment part may be formed using an additive process such as three-dimensional printing or by a more traditional production method. In particular, additive processes are able to form equipment parts with more complex geometries as compared to other manufacturing methods such as metal injection molding. Still, additive processes are often more expensive than other manufacturing processes. Thus, by only forming the equipment parts with complex geometries with an additive process, and forming other parts with less expensive processes, additive manufacturing may be realized at relatively reduced costs for some features. In one example, the second equipment part may be formed to have an overhanging extension that extends farther from the second equipment part than any extension of the sinterable first equipment part. Thus, additional design flexibility of the second equipment part may be achieved.

At step 106, optionally, a sintering aid is added to the sinterable first equipment part to lower a sintering temperature of the sinterable first equipment part. In one embodiment, the sintering aid may be co-printed with the binder, or may be included in with the binder composition itself. The use of a sintering aid may change the sintering temperature of an equipment part. Suitable sintering aids may include nanoparticle sintering aids as well as mesoporous materials. Suitable sintering aids may include a transition metal. Suitable transition metals may include one or more of copper, iron, nickel, palladium, cobalt, and the like. The sintering aid may be in a liquid or solid form at room temperature and selected based on the end use application, the materials being used, and the additive manufacturing method employed. in one embodiment, different amounts of sintering aid may be added to different portions of the sinterable first equipment part. In this manner, the portion of the first equipment part where bonding through the sintering process is desired may receive the sintering aid accordingly. In one embodiment, controlling the amount of sintering aid present in various portions allows for controlled sintering such that some portions sinter before other portions.

In one example, the sinterable first equipment part may be formed from metal particles grouped together in a green body by additive manufacturing. A first density of the metal particles in the green body may be substantially common throughout the green body prior to adding the sintering aid. The sinterable first equipment part may have different densities in the different volumes of the sinterable first equipment part after heating the sinterable first equipment part. In some embodiments, different amounts of sintering aid may be added to different portions of the sinterable first equipment part. For example, having more sintering aid near a surface may allow the surface portion to sinter before an internal portion. This may allow for stress relaxation of the overall component during its build. Conversely, having more sintering aid internally (relative to the skin portion) may allow for internal support for the component while it finishes the sintering process, and may, in some instances, alleviate surface cracking. In yet other embodiments, the distribution of sintering aid may be in homogeneous in a first portion of the component being formed, but absent or at a different concentration in another portion distal to the first portion. Based at least in part on application specific parameters, the concentration of the sintering aid may change abruptly across a defined volume, or the concentration may changed over a defined and/or controlled concentration gradient. Another degree of control can be achieved by using different sintering aid compositions in different portions of the part. Accordingly, the sintering process can be controlled as to rate, location, and order.

At step 108, the sinterable first equipment part is heated while the first equipment part is secured a second equipment part to form the equipment. Heating of the sinterable material of the first equipment part may be provided by a laser, oven, or the like. The temperature of the sinterable first equipment part is raised to just below the melting point of the sinterable powder, causing bonding of the sinterable powder, along with bonding the first equipment part and second equipment part.

In one example, heating the sinterable first equipment part sinters the first equipment part, while in another example, heating the sinterable first equipment part does not sinter the second equipment part. Where a reversible binder is used, the reversible binder may be decomposed. Upon decomposition, the residual components of the reversible binder may exfiltrate, may foam a molten metal, and/or may react (in whole or in part) with the sinterable powder material. In one example, the sinterable first equipment part and the second equipment part are both sinterable, and the sinterable first equipment part has a first sintering temperature, and the second equipment part has a second sintering temperature that is different from the first sintering temperature. In particular, the material of the first equipment part may be different than the material of the second equipment part, resulting in different sintering temperature ranges for each equipment part. In one embodiment, the difference between the first and second part may be that a flux or sinter aid is included in (or with) the first part but not the second (all other aspects being about the same). The effect is that the first part sinters different (such as, at a relatively lower temperature) than the second part.

In one embodiment, heating the sinterable first equipment part occurs at a temperature that is at least as hot as a lower sintering temperature of the first sintering temperature and the second sintering temperature. Specifically, heating the first equipment part and the second equipment part may include ramping a temperature at which the sinterable first equipment part and the second equipment part are heated to the first sintering temperature. The heating temperature of the sinterable first equipment part and the second equipment part may then be held at one or more of the first sintering temperature, or a temperature that is hotter than the first sintering temperature but cooler than the second sintering temperature. Then, the heating temperature of the first equipment part and the second equipment part may be ramped to the second, higher sintering temperature. In this manner, sintering occurs for both the first equipment part and second equipment part. The sintering may be done in stages. Consequently, heating the sinterable first equipment part bonds the sinterable first equipment part to the second equipment part without welding or brazing the sinterable first equipment part to the second equipment part.

In yet another embodiment, heating the sinterable first equipment part shrinks the sinterable first equipment part to form an interference fit to the second equipment part. The fit may be done without susequent welding or brazing the sinterable first equipment part to the second equipment part. Specifically, the sinterable powder and binding material of the sinterable first equipment part may have different coefficients of thermal expansion, causing variance in size of the equipment parts as a result of being heated. Therefore, the change in size may be used to provide additional couplings between the first equipment part and second equipment part. Alternatively, the sinterable first equipment part and the second equipment part may have substantially similar coefficients of thermal expansion. Regardless, when the parts are sintered in an oven with controlled temperature, atmospheric makeup (e.g. argon, nitrogen, etc.), and pressure (e.g. applied pressure, atmospheric pressure, vacuum, etc.), the size of an equipment part may be varied by adjusting these three variables. Thus, shrinking may be controlled during the process accordingly. Alternatively, the ratio of sinterable powder to binding material within the sinterable part may also be adjusted and considered to control the size of shrinking.

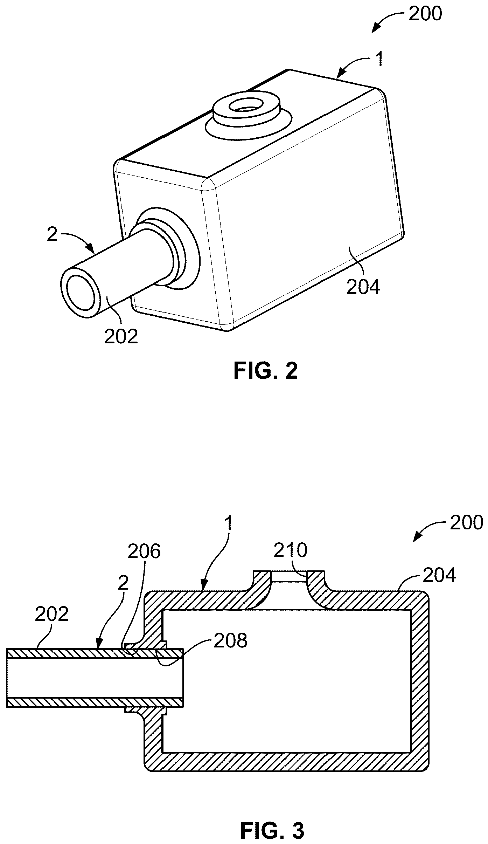

Figures 2-3 illustrate an example piece of equipment 200 formed using the manufacturing process of Figure 1. In particular, a first sinterable equipment part 202 is bonded together with a second equipment part 204 at a bonding interface surface 206. In the example, the first sinterable equipment part is a rolled tube that may be formed from a metal injection methodology, or otherwise. Meanwhile, the second equipment part that includes an inlet 208 that includes the bonding surface, and an outlet 210 that has an arcuate tapered surface. In particular, the second equipment part has more complex geometries, and thus may be formed from an additive manufacturing process, and then sintered to the rolled tube. In one example, the first sinterable equipment part is made of the same material as the second equipment part. Alternatively, the first sinterable equipment part is made of a different material than the second equipment part. In such an embodiment, the first sinterable equipment part may be bonded to the second equipment part by holding heat at a first sintering temperature, and then ramping the heat and holding the heat at a second sintering temperature. Alternatively, a sintering aid may be applied to provide matching sintering temperatures, even when the materials of the first sinterable equipment part and second equipment part differ.

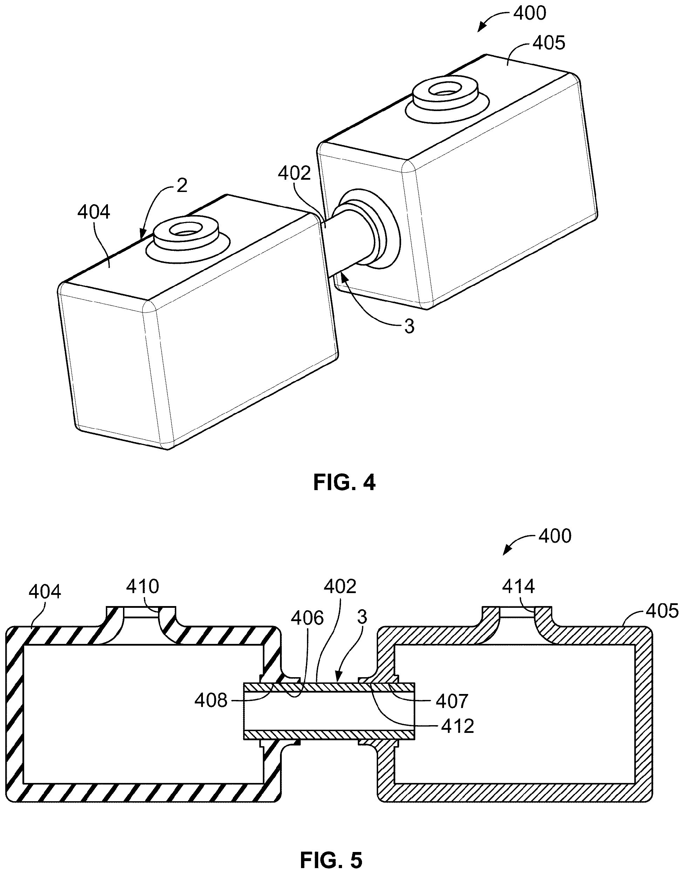

Figures 4-5 illustrate an example piece of equipment 400 formed using the manufacturing process of Figure 1. A first sinterable equipment part 402 may be bonded together with a second equipment part 404 at a first bonding interface surface 406, while a third equipment part 405 may be bonded together with the first sinterable equipment part as well at a second bonding interface surface 407. As an example, the first sinterable equipment part may be a rolled tube that may be formed from a metal injection methodology, or otherwise. Meanwhile, the second equipment part may include an inlet 408 that includes the first bonding surface, and an outlet 410 that has an arcuate tapered surface. In particular, the second equipment part may have relatively more complex geometries, and thus may be formed from an additive manufacturing process, and then sintered to the rolled tube using a process according to aspects of the invention. In one example, the first sinterable equipment part is made of the same material as the second equipment part. Similarly, the third equipment part also has an inlet 412 that includes the third bonding interface surface, and an outlet 414. in one embodiment, the outlet may have an arcuate tapered surface, in other embodiments the outlet may have relatively more complex geometry. Consequently, the third equipment part may be made from an additive manufacturing process.

The first sinterable equipment part may be made of a different material than the second equipment part and/or the third equipment part. To this end, the first, second, and third equipment parts may each be made of a different material, the same material, or two of the three may be made of the same material with the third being a different material Based on the materials, during the sintering process, the temperature may be ramped and held to a first sintering temperature, second sintering temperature, and/or third sintering temperature. Alternatively, a sintering aid may be applied to either or both of the first and second bonding surfaces to provide matching sintering temperatures, even when the materials of the first sinterable equipment part, second equipment part, and/or third equipment part differ.

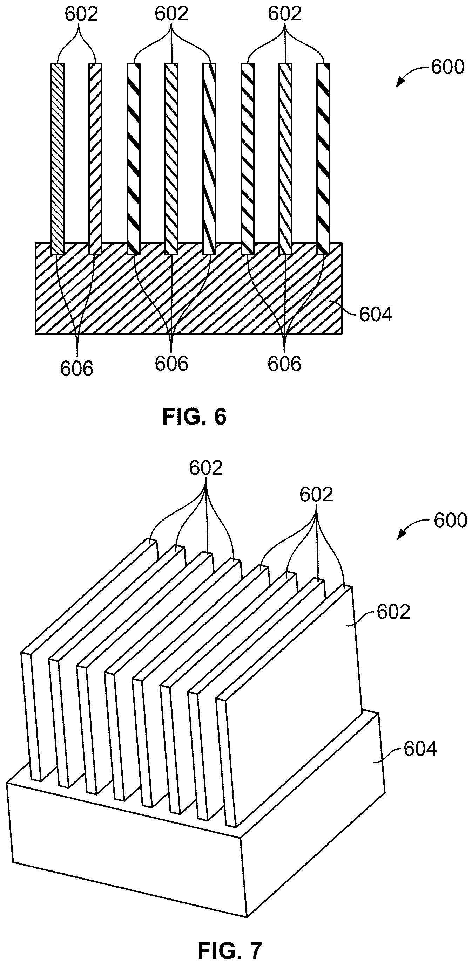

Figures 6-7 show yet another example of a piece of equipment 600 that may be formed using the process of Figure 1. In the embodiment of Figures 6-7, plural sinterable equipment parts 602 may be formed from a first manufacturing process. In particular, in one example, the plural sinterable equipment parts are plural plates that may be used as a heat exchanger, or heat sink. The plural sinterable equipment parts may be bonded to a second equipment part 604 that includes plural grooves 606 or openings for receiving a corresponding sinterable equipment part of the plural sinterable equipment parts. The second equipment part thus includes the complex geometry of the grooves, and may be formed from an additive manufacturing process. Similar to other embodiments, the materials of the plural sinterable equipment and the second equipment part may be the same or different. Also, sintering may occur at different bonding temperatures, by using a sintering aid or aids, or the like. Thus, while securing the first equipment part to the second equipment part, each are heated to form a monolithic final equipment part. Again, like with the other embodiments, by using the different manufacturing method for the different equipment parts, and sintering the equipment parts together, the cost of manufacturing may be reduced while not reducing the overall strength of the piece of the equipment. To this end, complex geometries may be achieved. A technical effect may be an improved manufacturing process or a finished component with different characteristics. Note, that the fins may differ from each other in terms of composition, surface preparation, and the like.

In one or more embodiments, a method may be provided that includes heating a sinterable first equipment part while securing the first equipment part to a second equipment part to form a monolithic final equipment part. Optionally, heating the sinterable first equipment part may sinter the first equipment part. Alternatively, heating the sinterable first equipment part may not sinter the second equipment part. In another aspect, the method also may include forming the sinterable first equipment part as a sinterable three-dimensional green body. Optionally, the sinterable first equipment part and the second equipment part may both sinterable. The sinterable first equipment part may have a first sintering temperature, and the second equipment part may have a second sintering temperature that is different from the first sintering temperature. The method may also include heating the sinterable first equipment part at a temperature that may be at least as hot as a hotter sintering temperature of the first sintering temperature and the second sintering temperature. In another aspect, heating the first equipment part and the second equipment part may include ramping a temperature at which the sinterable first equipment part and the second equipment part are heated to the first sintering temperature, and holding the heating temperature of the sinterable first equipment part and the second equipment part at one or more of (a) the first sintering temperature or (b) a temperature that is hotter than the first sintering temperature but cooler than the second sintering temperature. Heating the first equipment part and second equipment part may also include ramping the heating temperature of the sinterable first equipment part and the second equipment part to the second sintering temperature.

Optionally, heating the sinterable first equipment part may bond the sinterable first equipment part to the second equipment part without welding or brazing the sinterable first equipment part to the second equipment part. In one aspect, heating the sinterable first equipment part may shrink the sinterable first equipment part to form an interference fit to the second equipment part without welding or brazing the sinterable first equipment part to the second equipment part. In another example, the sinterable first equipment part may be a green body having a bonding agent, and heating the sinterable first equipment part may remove the bonding agent from the green body. In another aspect, the sinterable first equipment part and the second equipment part may have substantially similar coefficients of thermal expansion.

Optionally, the method may include applying a flux agent at an interface between the sinterable first equipment part and the second equipment part. The flux agent may bond the sinterable first equipment part to the second equipment part during heating. In another aspect, the method may also include adding a sintering aid to the sinterable first equipment part to lower a sintering temperature of the sinterable first equipment part. In another aspect, different amounts of the sintering aid may be added to different volumes of the sinterable first equipment part. In another aspect, the sinterable first equipment part may be formed from metal particles grouped together in a green body by additive manufacturing with a first density of the metal particles in the green body being substantially common throughout the green body prior to adding the sintering aid, the sinterable first equipment part having different densities in the different volumes of the sinterable first equipment part after heating the sinterable first equipment part.

Optionally, the method may also include forming the sinterable first equipment part to include one or more recesses at an interface between the sinterable first equipment part and the second equipment part. In another aspect, the method may also include forming the second equipment part to have an overhanging extension that extends farther from the second equipment part than any extension of the sinterable first equipment part. In one or more embodiments a method is provided that may include additively manufacturing a conductive green body; and obtaining a non-sinterable conductive body. The method may also include heating both the conductive green body and the non-sinterable conductive body together to sinter the conductive green body and to couple the conductive green body with the non-sinterable conductive body.

Optionally, the conductive green body and the non-sinterable conductive body may be formed from different grades of stainless steel. In another example, the conductive green body and the non-sinterable conductive body may be formed from different transition metals. In another aspect, the non-sinterable conductive body may be formed from a cermet or ceramic material. In yet another aspect, obtaining the conductive green body includes printing a three-dimensional green body. In one or more embodiments, a method is provided that may include coupling a sinterable, conductive green body with a non-sinterable body, and sintering the sinterable, conductive green body and the non-sinterable body to form a combined assembly of a sintered conductive body and the non-sinterable body.

In one embodiment, a sintering temperature difference may be used in conjunction with a melting point differential between two materials in a single part or component. Temperature control may be used to create a first structure or skeleton at a first sintering temperature having a slightly higher melting temperature than the first sintering temperature. Then the heat may be increased to create a second structure derivative of the first structure. For example, as the first sintered material melts at the second, higher sintering temperature - now melted the first material can, for example, flow, drain out (if a pathway exists), puddle internally, and the like. That is, rather than form a static sintered part from one material, a first and temporary part is made, followed by a second derivative part that is structured based on the structure of the first, temporary part where the second material sinters (creating a second structure) combined with the melt flow of the first material (hardening after cooling of the final part).

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A composition of matter for use in a binder jet, comprising:
a binder comprising a polymer made from saturated monomers.

2. The composition of claim 1, wherein the binder is a reversible binder.

3. The composition of claim 2, wherein the reversible binder has a degree of saturation that is more than about fifty percent.

4. The composition of claim 2, wherein reversible binder reacts by step-growth polymerization or addition polymerization.

5. The composition of claim 2, wherein reversible binder is silicon based or comprises one or more alkane, epoxy, and polyol moeity.

6. The composition of claim 1, wherein the monomers include a clevable group.

7. A composition of matter for use in a binder jet, comprising a mixture of:
a reversible binder
one or more sinterable powders.

8. The composition of claim 7, wherein the one or more powders include at least two powders that are differently sinterable from each other.

9. The composition of claim 8, wherein the one or more sinterable powders comprise at least one each of a metal powder and a ceramic precursor.

10. The composition of claim 7, wherein the reversible binder chemically reacts with metal powder during sintering to form an oxide.

11. The composition of claim 10, wherein the metal powder comprises aluminum and the reversible binder chemically reacts with the aluminum to form aluminum oxide or alumina.

12. The composition of claim 10, wherein the metal powder comprises steel and the reversible binder chemically reacts with the aluminum to form steel carbide.

13. The composition of claim 10, wherein the reversible binder chemically reacts with the metal powder to form a metal silicide, boride or nitride.

14. The composition of claim 7, wherein the reversible binder sublimates during sintering.

15. A method of binder jetting using a polymerizable monomer and a vulcanizing agent, comprising:
depositing the polymerizable monomer and vulcanizing agent in contact with each other during a binder jetting process to form a green body having a form of a target object; and
heating the green body and thereby to vulcanize the polymerizable monomer and to form the vulcanized target object.
